(19) Europäisches Patentamt
European Patent Office
Office européen des brevets

(11) **EP 0 771 688 B1**

(12) **EUROPÄISCHE PATENTSCHRIFT**

(45) Veröffentlichungstag und Bekanntmachung des Hinweises auf die Patenterteilung:
**18.08.1999 Patentblatt 1999/33**

(51) Int. Cl.$^6$: **B60L 11/18**

(21) Anmeldenummer: **96115417.6**

(22) Anmeldetag: **26.09.1996**

(54) **Verfahren zur dynamischen Einstellung der Leistung für ein Fahrzeug mit Brennstoffzelle**

Method for setting dynamic power of a vehicle with a fuel cell

Méthode pour régler la puissance d'un véhicule équipé d'une pile à combustible

(84) Benannte Vertragsstaaten:
**DE FR GB IT**

(30) Priorität: **02.11.1995 DE 19540824**

(43) Veröffentlichungstag der Anmeldung:
**07.05.1997 Patentblatt 1997/19**

(73) Patentinhaber:
**DBB Fuel Cell Engines GmbH**
**73230 Kirchheim/Teck-Nabern (DE)**

(72) Erfinder:
• **Sonntag, Josef**
**89257 Illertissen (DE)**

• **Lorenz, Helmut**
**72644 Oberboihingen (DE)**

(74) Vertreter: **Kocher, Klaus-Peter**
**Daimler-Benz Aktiengesellschaft,**
**FTP/S - C106**
**70546 Stuttgart (DE)**

(56) Entgegenhaltungen:
**DE-C- 4 322 765**     **US-A- 5 148 883**

• **PATENT ABSTRACTS OF JAPAN vol. 016, no. 095 (E-1175), 9.März 1992 & JP-A-03 276573 (FUJI ELECTRIC CO LTD), 6.Dezember 1991,**

**Beschreibung**

Die Erfindung betrifft ein Verfahren zur dynamischen Einstellung der Leistung einer elektrischen Antriebseinheit eines Fahrzeugs mit Brennstoffzelle gemäß dem Oberbegriff des Patentanspruchs 1.

Aus der DE 43 22 765 C1 ist ein Verfahren zur dynamischen Regelung der Leistung einer elektrischen Antriebseinheit in einem Fahrzeug bekannt, die von einer im Fahrzeug angeordneten Brennstoffzelle mit elektrischer Energie versorgt wird. Ausgehend von einer Leistungsanforderung, die aus der Fahrpedalstellung ermittelt wird, wird der Luftmassenstrom, der zur Bereitstellung dieser Solleistung seitens der Brennstoffzelle benötigt wird, berechnet und durch eine Regelung der Drehzahl eines in der Luftansaugleitung angeordneten Kompressor eingestellt. Um zu verhindern, daß die Brennstoffzelle mehr elektrische Leistung produziert, als die Antriebseinheit aufnehmen kann, kann die Antriebseinheit durch Aussenden entsprechender Fehlermeldungen begrenzend auf die Leistungsanforderung einwirken. Auf der anderen Seite wird der Leistungs-Sollwert, der der Antriebseinheit zugeführt wird, derart korrigiert, daß nie mehr als die von der Brennstoffzelle momentan erzeugte Leistung durch die Antriebseinheit angefordert wird. Dadurch kann ein Zusammenbrechen der Brennstoffzellenspannung verhindert werden.

Diese dynamische Leistungsregelung zeigt zum einen noch Totzeiten beim Beschleunigen des Fahrzeugs. Zum anderen wird beim Anfahren nicht das maximale Drehmoment des Antriebs freigegeben. Schließlich wird nicht in allen Betriebs- und Lastbereichen die optimale Luftversorgung der Brennstoffzelle in Abhängigkeit von der geforderten Antriebsleistung gewährleistet, wodurch im oberen Lastbereich das System instabil wird und der Antriebsstrom mit der Luftversorgung zu schwingen beginnt, beziehungsweise im Teillastbereich eine zu hohe Luftversorgung die Membran-Elektroden-Anordnung zu stark austrocknet.

Es ist daher die Aufgabe der Erfindung, ein Verfahren zur dynamischen Einstellung der Fahrzeugleistung zu schaffen, mit dem das Antriebsdrehmoment des Fahrantriebs beim Anfahren optimal ausgenutzt wird und mit dem das Verhältnis von zugeführter zu verbrauchter Luft in Abhängigkeit vom zu liefernden Strom in einem vorgegebenen Bereich gehalten wird.

Die Aufgabe wird durch die kennzeichnenden Merkmale des Patentanspruchs 1 gelöst.

Da es sich bei diesem Antriebssystem mit Brennstoffzellen um eine nichtlineare Mehrgrößenregelung handelt, wäre ein relativ großer mathematischer Aufwand für einen nichtlinearen Entkopplungsentwurf zur genaueren Regelung der Luftversorgung der Brennstoffzelle in Abhängigkeit von der Antriebsleistung notwendig. Es wurde daher eine dynamische Leistungssteuerung entwickelt, die eine maximale Ausnutzung des Antriebsdrehmoments beim Anfahren gewährleistet. Hierzu wurden die nichtlinearen Zusammenhänge der Brennstoffzelle und des Antriebsmotors in Versuchen ermittelt und als nichtlineare Kennfelder in einem Steuergerät abgelegt. Im unteren Drehzahlbereich wird durch die direkte Einspeisung der Fahrpedalstellung in die Ermittlung des Solldrehmoments eine maximale Ausnutzung des Antriebsdrehmoments beim Anfahren gewährleistet. Durch den Übergang zur Begrenzung der Fahrpedalstellung bei größeren Drehzahlen wird eine Luftunterversorgung der Brennstoffzelle verhindert.

Durch den Übergang von einem Leistungs- auf ein Stromkennfeld bei niedrigen Brennstoffzellenspannungen kann die Schwingungstendenz des Systems vermieden werden. Die Generierung eines Strom-Sollwertes direkt im Fahrmotor-Umrichter weist schließlich den Vorteil auf, daß zum einen die Abstimmung der Strombeziehungsweise Leistungskennfelder entfällt. Zum anderen wird das Fahrverhalten dadurch verbessert, daß durch die vorgelagerte Luftversorgung eine Fahrpedalbegrenzung beim Beschleunigen nicht mehr auftritt und daß die Zahl der Zellspannungsalarme verringert wird.

Weitere Vorteile und Ausgestaltungen der Erfindung gehen aus den Unteransprüchen und der Beschreibung hervor. Die Erfindung ist nachstehend anhand einer Zeichnung näher beschrieben, wobei

Fig. 1 eine Prinzipdarstellung einer Brennstoffzelle,

Fig. 2 eine Prinzipdarstellung eines Verfahrens zur Leistungssteuerung eines Fahrzeugs mit einer Brennstoffzelle und

Fig. 3 ein weiteres Ausführungsbeispiel eines erfindungsgemäßen Verfahrens zeigt.

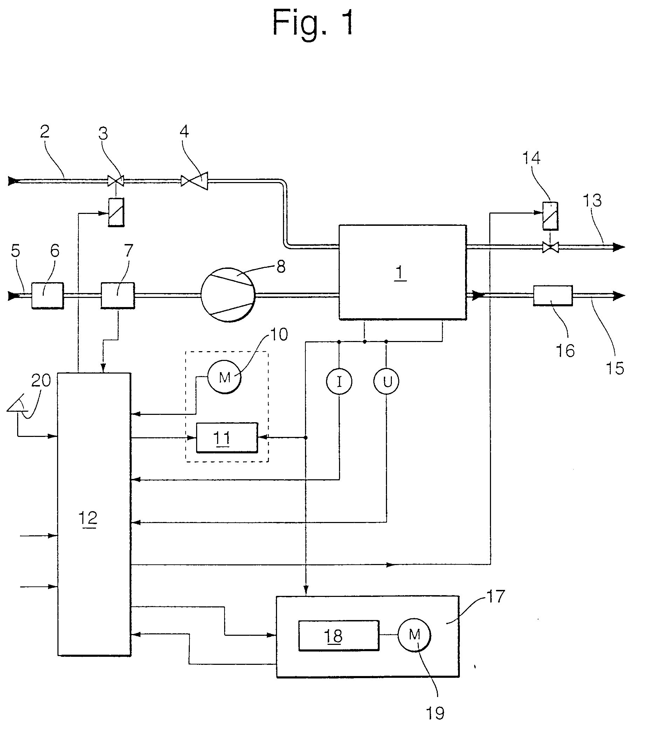

Der in Fig. 1 insgesamt mit 1 bezeichneten Brennstoffzelle, beispielsweise einer als PEM-Zelle bezeichnete Brennstoffzelle mit protonenleitender Membran, wird über eine erste Zuleitung 2, in der ein Ventil 3 und ein Druckregler 4 angeordnet sind, ein Brennmittel, beispielsweise Wasserstoffgas, zugeführt. Über eine zweite Zuleitung 5, in der ein Luftfilter 6, ein Luftmassenmesser 7 und ein Kompressor 8 angeordnet sind, wird der Brennstoffzelle 1 außerdem ein Oxydant, vorzugsweise Sauerstoff oder Umgebungsluft, unter Druck zugeführt. In der Brennstoffzelle 1 wird der Brennstoff an der Anode oxydiert, das Oxydant wird an der Kathode reduziert, wobei Anode und Kathode zur Vermeidung einer Knallgasreaktion zwischen dem Wasserstoff und dem Sauerstoff durch eine protonenleitende Membran voneinander getrennt sind. Bei dieser elektrochemischen Reaktion entsteht zwischen den beiden Elektroden eine Spannung. Durch Parallel-beziehungsweise Hintereinanderschaltung vieler solcher Zellen zu einem sogenannten Stack können Spannungen und Stromstärken erreicht werden, die zum Antrieb eines Fahrzeugs ausreichen.

Zum Antrieb des Kompressors 8 ist ein Elektromotor 10 vorgesehen, der im Normalbetriebs von der Brennstoffzelle 1 mit elektrischer Energie versorgt wird. Mit Hilfe eines Kompressor-Umrichters 11, der von einer Steuereinheit 12 angesteuert wird, kann die Drehzahl $n_K$ des Elektromotors 10 und somit auch des Kompressors 8 geregelt werden. Über die Drehzahl $n_K$ des Kompressors 8 kann der Oxydant-Massenstrom

$$\dot{L}\text{-ist}$$

und damit die Leistung $P_{BZ}$ der Brennstoffzelle 1 beeinflußt werden.

Das Abführen der Luft aus der Brennstoffzelle 1 erfolgt über eine erste Abströmleitung 15. In dieser ersten Abströmleitung 15 ist ein Druckregelventil 16 angeordnet, mit dessen Hilfe in der Brennstoffzelle 1 ein variabler Luft-Betriebsdruck aufrechterhalten wird. Um eventuelle Ablagerungen oder Verunreinigungen des Wasserstoffgases aus der Brennstoffzelle 1 entfernen zu können, ist eine zweite Abströmleitung 13, in der ein sogenanntes Purgeventil 14 angeordnet ist, vorgesehen. Zum Antrieb des Fahrzeugs ist eine Antriebseinheit 17, bestehend aus einem Fahrmotor-Umrichter 18 und einem Elektro-Fahrmotor 19, vorgesehen.

Die Steuereinheit 12 erhält über elektrische Leitungen Informationen unter anderem über den momentanen Istwert des Luftvolumenstroms

$$\dot{L}\text{-ist}\,'$$

den Betriebszustand der Antriebseinheit 17, die Drehzahl $n_{FM}$ des Elektro-Fahrmotors 10, die Anforderung $FP$ des Fahrpedals 20 und über die von der Brennstoffzelle 1 erzeugte Spannung $_{BZ}$ und den entsprechenden Strom $I_{BZ}$. Diese Informationen werden in einer oder mehreren Steuereinheiten 12 verarbeitet und daraus unter anderem Stellsignale für die Umrichter 11 und 18 und die Ventile 3 und 14 erzeugt, die wiederum über entsprechende Leitungen an die einzelnen Komponenten übermittelt werden.

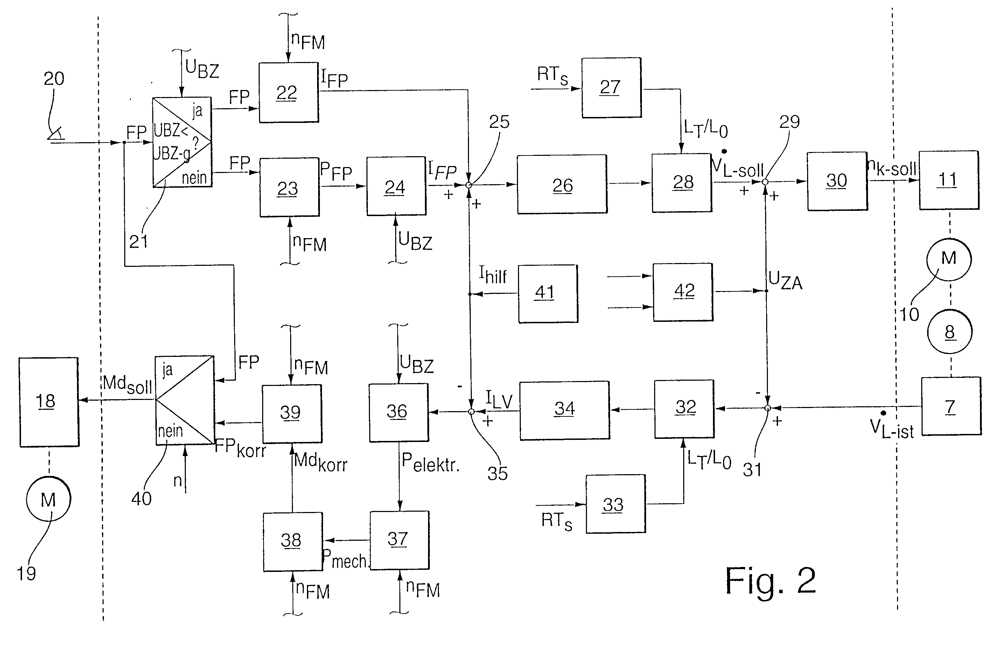

Das System gemäß Fig. 2 ist durch vertikale gestrichelte Linien in drei Bereiche aufgeteilt. Das linke Drittel umfaßt die Antriebseinheit 17, bestehend aus dem Fahrpedal 20 und dem Elektro-Fahrmotor 19 mit zugehörigem Fahrmotor-Umrichter 18. Das rechte Drittel umfaßt die Luftversorgung der Brennstoffzelle 1, bestehend aus Kompressor-Umrichter 11, Elektromotor 10, und einem Kompressor 8. Hinzu kommt noch der Sensor 7 zur Messung des zugeführten Luftvolumenstroms

$$\dot{L}\text{-ist}\,\cdot$$

Hierzu wird vorzugsweise ein Hitzdrahtluftmassenmesser, im folgenden als HLM-Sensor bezeichnet, verwendet. Der mittlere Teil von Fig. 1 umfaßt die Steuerung des Systems, die in einem oder auch mehreren Steuergeräten 12 abgelegt werden kann.

Als Eingangsgröße für das System wird die mit $FP$ bezeichnete Fahrpedalanforderung ermittelt. Dieser Wert von $FP$ wird zum einen direkt in Block 40 als Eingangsgröße eingelesen. Zum anderen wird in den Blöcken 21 bis 30 ausgehend von der Fahrpedalanforderung $FP$ die Luftversorgung

$$\dot{L}\text{-soll}$$

und somit die Leistung $P_{BZ}$ der Brennstoffzelle 1 gesteuert. Umgekehrt wird dann in den Blöcken 31 bis 39 aus dem tatsächlich gemessenen Luftvolumenstrom

$$\dot{L}\text{-ist}$$

ein korrigierter Sollwert $FP_{korr}$ für die Fahrpedalanforderung ermittelt und ebenfalls in Block 40 eingelesen. Dort wird auf der Basis der momentanen Drehzahl $n_{FM}$ des Fahrmotors aus der Fahrpedalanforderung $FP$ beziehungsweise $FP_{korr}$ ein Solldrehmoment $Md_{soll}$ ermittelt und an die Antriebseinheit 17 ausgegeben. Und zwar wird bis zu einer Grenzdrehzahl $n_{FM-g}$, beispielsweise 1500 U/min, das Solldrehmoment $Md_{soll}$ direkt aus $FP$ ermittelt. Bei Drehzahlen $n_{FM}$ oberhalb der Grenzdrehzahl $n_{FM-g}$ wird dann jeweils der kleinere der beiden Werte $FP$ beziehungsweise $FP_{korr}$ zur Ermittlung des Solldrehmomentes $Md_{soll}$ verwendet.

Diese Vorgehensweise hat den Vorteil, daß bei niedrigen Drehzahlen $n_{FM} < n_{FM-g}$, das heißt vor allem beim Anfahren, das volle Drehmoment der Antriebseinheit 17 ohne Verzögerung zur Verfügung steht. Um eine Luftunterversorgung der Brennstoffzelle 1 zu vermeiden, wird der Wert für die Fahrpedalanforderung $FP$ jedoch bei höheren Drehzahlen $n_{FM} > n_{FM-g}$ durch die korrigierte Fahrpedalanforderung $FP_{korr}$ begrenzt.

Die Steuerung der Luftversorgung der Brennstoffzelle 1 erfolgt in den Blöcken 21 bis 30. Hierbei wird in den Blöcken 22 bis 24 aus der ermittelten Fahrpedalanforderung $FP$ anhand der momentanen Drehzahl $n_{FM}$ des Elektro-Fahrmotors 19 zuerst ein Strom-Sollwert $I_{FP}$ ermittelt. Dies erfolgt entweder in Block 22 anhand eines Stromkennfeldes oder in den Blöcken 23 und 24 anhand eines Leistungskennfeldes und anschließender Division durch die gemessene Brennstoffzellenspannung $_{BZ}$. Durch diese Division in Block 24 neigt das System bei niedrigen Brennstoffzellenspannungen $_{BZ}$ zum Schwingen. Daher wird in Block 21 anhand der gemessenen Brennstoffzellenspannung $_{BZ}$ der geeignete Zweig ausgewählt, wobei unterhalb einer vorgegebenen Grenzspannung $_{BZ-g}$, beispielsweise $_{BZ-g} = 153$ V, das Stromkennfeld und oberhalb der Grenzspannung $_{BZ-g}$ das Leistungskennfeld verwendet wird.

Anschließend wird in Block 26 aus dem Strom-Sollwert $I_{FP}$ ein Sollwert für den Luftvolumenstrom

$$\dot{L}\text{-}soll$$

anhand einer Kennlinie, die den nichtlinearen Zusammenhang

$$\dot{L}\text{-}soll = f(I_{FP})$$

zwischen den Sollwerten für den Luftvolumenstrom

$$\dot{L}\text{-}soll$$

und dem Strom-Sollwert $I_{FP}$ darstellt, ermittelt. Der Luftvolumenstrom-Sollwert

$$\dot{L}\text{-}soll$$

wird vorzugsweise in Nm³/h bei einer Nennbetriebstemperatur $RT_{S0}$ von 72°C ermittelt. Um die Kaltstarteigenschaften der Brennstoffzelle 1 zu verbessern kann dieser Luftvolumenstrom-Sollwert

$$\dot{L}\text{-}soll$$

in Block 28 durch Multiplikation mit einem Kaltstartfaktor $L_T/L_0$ an den erhöhten Luftbedarf der Brennstoffzelle 1 beim Kaltstart angepaßt werden. Der Kaltstartfaktor $L_T/L_0$, der vorzugsweise Werte zwischen 1 und 1,6 annehmen kann, wird in Block 27 in Abhängigkeit von der aktuellen Betriebstemperatur $RT_S < RT_{S0}$ aus einer Kennlinie ermittelt. Anschließend wird in Block 30 anhand einer weiteren Kennlinie der Luftvolumenstrom-Sollwert

$$\dot{L}\text{-}soll$$

in einen Sollwert $n_{K\text{-}soll}$ für den Kompressor 8 umgewandelt und der Luftversorgung 11, 7, 8 der Brennstoffzelle 1 zur Verfügung gestellt. Zur Steuerung des Luftvolumenstroms

$$\dot{L}\text{-}ist$$

wird dann die Drehzahl $n_K$ des Elektromotors 10 und damit des Kompressors 8 mit Hilfe des Kompressor-Umrichters 11 laufend auf diese Solldrehzahl $n_{K\text{-}soll}$ eingestellt.

Da die Luftversorgung Verzögerungszeiten zwischen der Sollwertvorgabe und dem tatsächlichen Luftvolumenstrom aufweist, wird in den Blöcken 31 bis 39 aus dem gemessenen Luftvolumenstrom

$$\dot{L}\text{-}ist$$

eine korrigierte Fahrpedalanforderung $FP_{korr}$ berechnet. Diese korrigierte Fahrpedalanforderung $FP_{korr}$ wirkt dann in bestimmten Betriebsbereichen begrenzend auf die von der Antriebseinheit 17 aufgenommene Leistung. Dadurch kann verhindert werden, daß die Antriebseinheit 17 mehr Strom beziehungsweise Leistung von der Brennstoffzelle 1 anfordert, als diese zu diesem Moment liefern kann.

Die Ermittlung der korrigierten Fahrpedalanforderung $FP_{korr}$ erfolgt gegenüber den Blöcken 21 - 30 in umgekehrter Reihenfolge und mit entsprechend invertierten Kennfeldern. Der Schritt gemäß Block 30 entfällt jedoch, da der HLM-Sensor 7 direkt den aktuellen Luftvolumenstrom-Istwert

$$\dot{L}\text{-}ist$$

bereitstellt. Dieser Luftvolumenstrom-Istwert

$$\dot{L}\text{-}ist$$

wird dann in Block 32 um den in Block 33 ermittelten Kaltstartanteil $L_T/L_0$ wieder verringert, damit die Antriebseinheit 17 nur den durch die Fahrpedalanforderung vorgegebenen Sollwert erhält. In Block 34 wird dann anschließend aus diesem Luftvolumenstrom-Istwert

$$\dot{L}\text{-}ist$$

wiederum ein Strom-Istwert $I_{LV}$ ermittelt, wobei Block 34 der Umkehrfunktion von Block 26 entspricht. Aus diesem Strom-Istwert $I_{LV}$ wird dann in den Blöcken 36 - 39 die korrigierte Fahrpedalanforderung $FP_{korr}$ ermittelt. Hierzu wird in Block 36 mit Hilfe der Brennstoffzellenspannung $_{BZ}$ die zur Verfügung stehende elektrische Leistung $P_{elektr.}$ und mit Hilfe der momentanen Fahrmotor-Drehzahl $n_{FM}$ in Block 37 die daraus resultierende mechanische Leistung $P_{mech}$ bestimmt. In den Blöcken 38 und 39 wird schließlich jeweils in Abhängigkeit von der momentanen Fahrmotor-Drehzahl $n_{FM}$ aus der mechanischen Leistung $P_{mech}$ das korrigierte Solldrehmoment $Md_{korr}$ für die Antriebseinheit 17 und daraus die korrigierte Fahrpedalanforderung $FP_{korr}$ ermittelt.

Diese korrigierte Fahrpedalanforderung $FP_{korr}$ dient neben der direkt vom Fahrpedal 20 abgeleiteten Fahrpedalanforderung $FP$ und der Drehzahl der Antriebseinheit 17 als Eingangsgröße für die Ermittlung des Solldrehmoments $Md_{soll}$ für die Antriebseinheit 17 in Block 40. Unterhalb einer Grenzdrehzahl $n_{FM-g}$ wird, wie bereits weiter oben beschrieben, das Solldrehmoment $Md_{soll}$ aus der Fahrpedalanforderung $FP$ ermittelt. Oberhalb dieser Grenzdrehzahl $n_{FM-g}$ wird das Solldrehmoment $Md_{soll}$ auf der Basis der direkten oder der korrigierten Fahrpedalanforderung $FP$, $FP_{korr}$ berechnet, in Abhängigkeit davon, welcher Wert kleiner ist. Das heißt, die korrigierte Fahrpedalanforderung $FP_{korr}$ wirkt oberhalb der Grenzdrehzahl $n_{FM-g}$ begrenzend auf das Solldrehmoment $Md_{soll}$. Dieses Solldrehmoment $Md_{soll}$ wird an die Antriebseinheit 17 weitergegeben, die dann die entsprechende Leistung von der Brennstoffzelle 1 aufnimmt.

Es handelt sich bei diesem Verfahren also nicht um eine Leistungsregelung, sondern um eine dynamische Leistungssteuerung, bei der die vom Fahrer über das Fahrpedal 20 angeforderte Fahrleistung zum einen an die Luftversorgung der Brennstoffzelle 1 und zum anderen direkt an die Antriebseinheit 17 weitergegeben wird. Unter bestimmten Betriebsbedingungen, beispielsweise bei starken Beschleunigungsvorgängen, beim Kaltstart oder bei Störungen an der Brennstoffzelle, kann die Berechnung der korrigierten Fahrpedalanforderung $FP_{korr}$ begrenzend auf die an die Antriebseinheit 17 weitergegebene Drehmomentanforderung $Md_{soll}$ wirken. Dadurch wird eine mögliche Luftunterversorgung der Brennstoffzelle 1 verhindert. Das heißt, die vom Fahrer vorgegebene Leistungsanforderung wird durch die anhand des gemessenen Luftvolumenstroms

$$\dot{L}-ist$$

berechnete Ist-Leistung $P_{elektr.}$ der Brennstoffzelle 1 gegebenenfalls korrigiert, um sowohl die Antriebseinheit 17 als auch die Brennstoffzelle 1 optimal zu betreiben. Die Brennstoffzelle 1 wird somit in jedem Betriebspunkt mit einer optimalen Luftversorgung betrieben, daß heißt, das Verhältnis $\lambda$ der zugeführten zur in der Brennstoffzelle 1 verbrauchten Luft entspricht der in Block 26 vorgegebenen Kennlinie, da die verbrauchte Luft direkt proportional zum gelieferten Strom $I_{LV}$ ist.

Bei dem im Ausführungsbeispiel beschriebenen Verfahren wird zusätzlich auch die elektrische Energie, die durch elektrische Nebenaggregate im Fahrzeug verbraucht wird, berücksichtigt. Hierzu wird der benötigte elektrische Hilfsstrom $I_{hilf}$ in Block 41, beispielsweise durch Auslesen aus entsprechenden Kennfeldern für die einzelnen Zusatzaggregate, ermittelt. Zum einen wird dieser Hilfsstrom $I_{hilf}$ dann anschließend in Block 25 zum Strom-Sollwert $I_{FP}$ addiert, zum anderen in Block 35 vom ermittelten Strom-Istwert $I_{LV}$ wieder abgezogen. Dadurch wird zwar bei der Sollwertermittlung für die Luftversorgung der Brennstoffzelle 1 der erhöhte Energieverbrauch berücksichtigt, bei der Ermittlung des korrigierten Fahrpedalanforderung $FP_{korr}$ für den Fahrantrieb wird dieser Anteil jedoch wieder abgezogen.

Neben der elektrischen Hilfsenergie wird beim beschriebenen Verfahren auch sogenannte Zellspannungsalarme berücksichtigt. Üblicherweise sind bei Brennstoffzellen 1 Einrichtungen zur Zellspannungsüberwachung, hier als Block 42 dargestellt, vorgesehen, die bei Störungen der Brennstoffzelle 1 Alarmsignale $Z_A$ erzeugen. Hierbei kann auch zwischen verschiedenen Alarmzuständen $Z_{A1}$, $Z_{A2}$ unterschieden werden. Um nun unzulässige Betriebszustände der Brennstoffzelle 1, beispielsweise zu niedrige Zellspannungen, zu vermeiden, wird bei Vorliegen eines Zellspannungsalarms $Z_A$ in Block 29 der Luftvolumenstrom-Sollwert

$$\dot{L}-soll$$

um einen vorgegeben Betrag

$$\dot{L}-UZA$$

erhöht. Dadurch wird eine Luftunterversorgung der Brennstoffzelle verhindert. Um dennoch aus dem gemessenen Luftvolumenstrom-Istwert

$$\dot{L}-ist$$

eine der Fahrpedalstellung entsprechende korrigierte Fahrpedalanforderung $FP$ berechnen zu können, wird dieser Zusatz-Luftvolumenstrom

$$\dot{L}-UZA$$

in Block 31 vom tatsächlich gemessenen Luftvolumenstrom-Istwert

$$\dot{L}-ist$$

wieder subtrahiert.

Die im Verfahren verwendeten nichtlinearen Zusammenhänge der Brennstoffzelle und des Antriebsmotors können zum Beispiel in Versuchen experimentell ermittelt und als nichtlineare Kennfelder in einem oder mehreren Steuergeräten abgelegt werden.

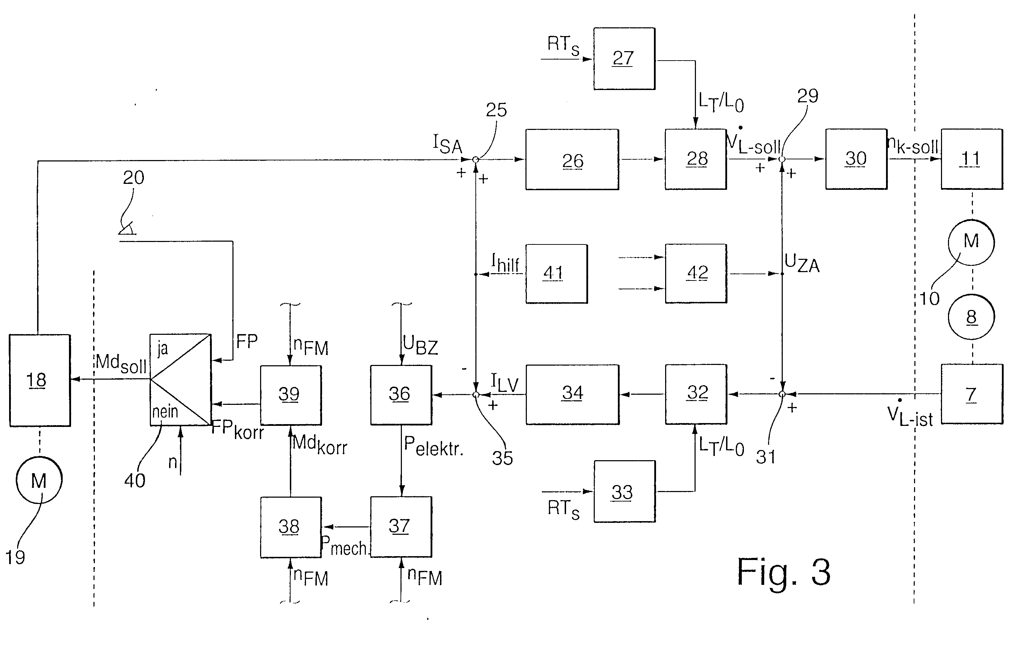

Ein zweites Ausführungsbeispiel ist in Fig. 3 dargestellt, wobei gleiche Teile mit gleichen Bezugszeichen gekennzeichnet sind. Beim oben beschriebenen Verfahren wurde die Luftversorgung der Brennstoffzelle 1 der jeweilig bestehenden Drehzahl $n_{FM}$ des Elektro-Fahrmotors 19 und somit dem momentanen Strom-Istwert der Antriebseinheit 17 über die Kennfelder 22 und 23 nachgefahren. Um die Luftversorgung der Brennstoffzelle 1 nun vor der entsprechenden Leistungsbeziehungsweise Stromaufnahme der Antriebseinheit 17 anzusteuern und damit eine Begrenzung der Fahrpedalanforderung FP beim Beschleunigen möglichst zu vermeiden, wird in diesem zweiten Ausführungsbeispiel der Strom-Sollwert $I_{FP}$ durch eine zusätzliche Einrichtung im Fahrmotor-Umrichter 18 generiert.

Antriebsregelungen für Drehstrom-Elektromotoren sind aus dem Stand der Technik, beispielsweise aus der Zeitschrift Elektronik, Heft 21/1994, Seite 58 ff., bekannt. Die Erfindung kann jedoch auf alle bekannten Elektromotoren und entsprechende Antriebsregelungen angewendet werden.

Dieses Verfahren hat den Vorteil, daß die Kennfelder 22 und 23 samt entsprechender Abstimmung wegfallen. Ausgehend von einer Fahrpedalanforderung FP wird der Steuereinheit 12 zirka alle 70 μs ein neuer Strom-Sollwert $I_{FP}$ zugeführt und daraus die entsprechende Soll-Drehzahl $n_{K\text{-}soll}$ für den Elektromotor 10 bestimmt. Der elektrischen Antriebseinheit 17 und der Luftversorgung werden die jeweiligen Sollwerte also praktisch zeitgleich zur Verfügung gestellt. Eine Begrenzung $FP_{korr}$ der Fahrpedalanforderung beim Beschleunigen tritt durch diese vorgelagerte Luftversorgung nicht mehr auf. Ebenso sind weniger Zellspannungsalarme $ZA$ zu erwarten, was insgesamt ein besseres Fahrverhalten bedeutet.

Im Unterschied zum ersten Ausführungsbeispiel entfallen beim Verfahren gemäß Fig. 3 die Blöcke 21 bis 24. Vielmehr werden aus der an die Antriebseinheit 17 weitergegebene Drehmomentanforderung $Md_{soll}$ im Fahrmotor-Umrichter 18 Sollwerte für die Motorstrangströme des Elektro-Fahrmotors 19 ermittelt und daraus in Abhängigkeit von der Fahrmotor- beziehungsweise Brennstoffzellenspannung $_{BZ}$, der Leistungsstellertemperatur und dessen Wirkungsgrad ein Strom-Sollwert $I_{FP}$ für die Brennstoffzelle 1 generiert und an den Block 25 übergeben. Aus diesem Strom-Sollwert $I_{FP}$ wird dann analog zum Verfahren gemäß Fig. 1 in den Blöcken 26 bis 30 ein Sollwert $n_{K\text{-}soll}$ für die Kompressor-Drehzahl bestimmt und entsprechend eingestellt.

**Patentansprüche**

1. Verfahren zur dynamischen Einstellung der Leistung einer elektrischen Antriebseinheit (17) eines Fahrzeugs, die von einer im Fahrzeug angeordneten Brennstoffzelle (1) mit elektrischer Energie versorgt wird, wobei

   - ausgehend von einer Fahrpedalanforderung (FP) ein Sollwert für die hierfür benötigte Brennstoffzellenleistung ermittelt wird,
   - die Brennstoffzellenleistung auf diesen Sollwert laufend eingestellt wird
   - ausgehend von der tatsächlich gemessenen Brennstoffzellenleistung eine korrigierte Fahrpedalanforderung ($FP_{korr}$) ermittelt wird, die der maximal für die Antriebseinheit zur Verfügung stehenden Brennstoffzellenleistung entspricht,
   - und wobei die Leistung des Fahrantriebs zumindest zeitweise ausgehend von der korrigierten Fahrpedalanforderung eingestellt wird,

   **dadurch gekennzeichnet,**
   daß die Leistung ($Md_{soll}$) der Antriebseinheit (17) direkt ausgehend von der Fahrpedalanforderung (FP) eingestellt wird, solange die Drehzahl ($n_{FM}$) der Antriebseinheit (17) unterhalb einer vorgegebenen Drehzahlschwelle ($n_{FM\text{-}g}$) liegt, und daß bei höheren Drehzahlen ($n_{FM} > n_{FM\text{-}g}$) die Leistungsaufnahme ($Md_{soll}$) der Antriebseinheit (17) durch die korrigierte Fahrpedalanforderung ($FP_{korr}$) begrenzt wird, wobei die Brennstoffzellenleistung ($P_{BZ}$) ausgehend von der Fahrpedalanforderung (FP) gesteuert wird.

2. Verfahren nach Anspruch 1,
   **dadurch gekennzeichnet,**
   daß ausgehend von der Fahrpedalanforderung (FP) unterhalb eines Grenzwertes ($_{BZ\text{-}g}$) für die momentane Brennstoffzellenspannung anhand der momentanen Drehzahl ($n_{FM}$) des Elektro-Fahrmotors (19) über ein Stromkennfeld (Block 22) des Elektro-Fahrmotors (19) direkt ein Strom-Sollwert ($I_{FP}$) für die Brennstoffzelle (1) ermittelt wird.

3. Verfahren nach Anspruch 1,
   **dadurch gekennzeichnet,**
   daß ausgehend von der Fahrpedalanforderung (FP) oberhalb eines Grenzwertes ($_{BZ\text{-}g}$) für die momentane Brennstoffzellenspannung anhand der momentanen Drehzahl ($n_{FM}$) des Elektro-Fahrmotors (19) über ein Leistungskennfeld (Block 23) des Elektro-Fahrmotors (19) ein Leistungs-Sollwert ($P_{FP}$) und aus diesem anhand der momentanen Brennstoffzellenspannung ($_{BZ}$) ein Strom-Sollwert ($I_{FP}$) für die Brennstoffzelle (1) ermittelt wird.

4. Verfahren nach Anspruch 1,
   **dadurch gekennzeichnet,**
   daß der Strom-Sollwert ($I_{FP}$) in Abhängigkeit vom benötigten Strombedarf der elektrischen Zusatzaggregate um einen vorgegebenen Betrag ($I_{hilf}$) erhöht und der gemessene Strom-Istwert ($I_{LV}$) um den entsprechenden Betrag ($I_{hilf}$) reduziert wird.

5. Verfahren nach Anspruch 1,
   **dadurch gekennzeichnet,**
   daß der erhöhte Luftbedarf der Brennstoffzelle (1) beim Kaltstart durch einen in Abhängigkeit von der aktuellen Betriebstemperatur ($RT_S$) vorgegebenen Kaltstartfaktor ($L_T/L_0$) korrigiert wird.

6. Verfahren nach Anspruch 1,
**dadurch gekennzeichnet,**
daß der Luftvolumenstrom-Sollwert

$$(\dot{L}_{-soll})$$

bei Vorliegen eines Zellspannungsalarms ($_{ZA}$) um einen vorgegebenen Betrag

$$(\dot{L}_{-UZ4})$$

erhöht und der gemessene Luftvolumenstrom-Ist-wert

$$(\dot{L}_{-ist})$$

um den entsprechenden Betrag

$$(\dot{L}_{-UZ4})$$

reduziert wird.

7. Verfahren nach Anspruch 1,
**dadurch gekennzeichnet,**
daß bei der Ermittlung der korrigierten Fahrpedalanforderung ($FP_{korr}$) der Wirkungsgrad der Antriebseinheit (17) berücksichtigt wird.

8. Verfahren nach Anspruch 1,
**dadurch gekennzeichnet,**
daß zumindest die nichtlinearen Zusammenhänge des Brennstoffzellensystems (1) und der Antriebseinheit (17) in Versuchen ermittelt und als nichtlineare Kennfelder abgelegt werden.

9. Verfahren nach Anspruch 1,
**dadurch gekennzeichnet,**
daß durch die Messung des Luftvolumen-Istwertes

$$(\dot{L}_{-ist})$$

eine rückkopplung zur Fahrpedalanforderung (FP) besteht.

10. Verfahren nach Anspruch 1,
**dadurch gekennzeichnet,**
daß die Luftversorgung der Brennstoffzelle (1) in Abhängigkeit vom zu liefernden Strom ($I_{FP}$) innerhalb eines vorgegebenen λ-Bereiches gehalten wird.

## Claims

1. Process for the dynamic adjustment of the power of an electric drive unit (17) of a vehicle, which is supplied with electrical energy from a fuel cell (1) positioned in the vehicle, such that:

   - beginning from a driving pedal demand (FP) a nominal value is determined for the requisite fuel cell power,
   - the fuel cell power is continuously adjusted to the said nominal value,
   - beginning from the fuel cell power actually measured, a corrected driving pedal demand ($FP_{korr}$) is determined, which corresponds to the maximum fuel cell power available for the drive unit,
   - and such that the power of the vehicle drive is adjusted at least from time to time beginning from the corrected driving pedal demand,

   **characterised in that**
   the power ($Md_{soll}$) of the drive unit (17) is adjusted directly by the driving pedal demand (FP) so long as the revolution speed ($n_{FM}$) of the drive unit (17) is below a predetermined revolution speed threshold ($n_{FM-g}$), and at higher revolution speeds ($n_{FM} > n_{FM-g}$) the power uptake ($Md_{soll}$) of the drive unit (17) is limited by the corrected driving pedal demand ($FP_{korr}$) so that the fuel cell power ($P_{BZ}$) is controlled beginning from the driving pedal demand (FP).

2. Process according to Claim 1,
   **characterised in that**
   beginning from the driving pedal demand (FP) below a limit value ($_{BZ-g}$) for the instantaneous fuel cell voltage a nominal current value ($I_{FP}$) is determined directly for the fuel cell (1) on the basis of the instantaneous revolution speed ($n_{FM}$) of the electric drive motor (19) via a current performance characteristic (block 22) of the electric drive motor (19).

3. Process according to Claim 1,
   **characterised in that**
   beginning from the driving pedal demand (FP) above a limit value ($_{BZ-g}$) for the instantaneous fuel cell voltage a nominal power value ($P_{FP}$) is determined on the basis of the instantaneous revolution speed ($n_{FM}$) of the electric drive motor (19) via a power performance characteristic (block 23) of the electric drive motor (19) and from this, on the basis of the instantaneous fuel cell voltage ($_{BZ}$), a nominal current value ($I_{FP}$) for the fuel cell (1), is also determined.

4. Process according to Claim 1,
   **characterised in that**

as a function of the necessary current demand of the auxiliary electrical aggregates, the nominal current value ($I_{FP}$) is increased by a predetermined amount ($I_{hilf}$) and the measured actual current value ($I_{LV}$) is reduced by the corresponding amount ($I_{hilf}$).

5. Process according to Claim 1
**characterised in that**
the increased air requirement of the fuel cell (1) for cold starting is corrected by a predetermined cold start factor ($L_T/L_0$) as a function of the actual operating temperature ($RT_S$).

6. Process according to Claim 1,
**characterised in that**
when a cell voltage alarm ($_{ZA}$) is present the nominal airflow volume

$$(\dot{L}\text{-}soll)$$

is increased by a predetermined amount

$$(\dot{L}\text{-}UZA)$$

and the measured actual airflow volume

$$(\dot{L}\text{-}ist)$$

is reduced by the corresponding amount

$$(\dot{L}\text{-}UZA).$$

7. Process according to Claim 1,
**characterised in that**
in determining the corrected driving pedal demand ($FP_{korr}$) the efficiency of the drive unit (17) is taken into account.

8. Process according to Claim 1,
**characterised in that**
at least the non-linear relationships of the fuel cell system (1) and the drive unit (17) are determined experimentally and entered as non-linear performance characteristics.

9. Process according to Claim 1,
**characterised in that**
by measurement of the actual airflow volume

$$(\dot{L}\text{-}ist)$$

there is a feedback to the driving pedal demand (FP).

10. Process according to Claim 1
**characterised in that**
the air supply to the fuel cell (1) is held within a predetermined $\lambda$-range as a function of the current ($I_{FP}$) to be delivered.

**Revendications**

1. Procédé de réglage dynamique de la puissance de l'unité d'entraînement électrique (17) d'un véhicule, qui est alimentée en énergie électrique par une pile à combustible (11) disposée dans le véhicule, selon lequel

   ♦ à partir d'une demande (FP) de la pédale d'accélérateur, une valeur de consigne est déterminée pour la puissance de la pile à combustible nécessaire à cet effet,
   ♦ la puissance de la pile à combustible est réglée d'une manière continue sur cette valeur de consigne,
   ♦ une demande corrigée ($FP_{korr}$) de la pédale d'accélérateur, qui correspond à la puissance maximale de la pile à combustible disponible pour l'unité d'entraînement, est déterminée à partir de la puissance de la pile à combustible effectivement mesurée, et
   ♦ la puissance du dispositif d'entraînement est réglée au moins par instant sur la base de la demande corrigée de la pédale d'accélérateur,

   **caractérisée en ce**
   que la puissance ($Md_{soll}$) de l'unité d'entraînement (17) est réglée directement à partir de la demande (FP) de la pédale d'accélérateur, tant que la vitesse de rotation ($n_{fm}$) de l'unité d'entraînement (17) est inférieure à un seuil prédéterminé de la vitesse de rotation ($n_{FM\text{-}g}$) et que pour des vitesses de rotation supérieures ($n_{FM}>n_{FM\text{-}g}$) l'absorption de puissance ($Md_{soll}$) de l'unité d'entraînement (17) est limitée par la demande corrigée ($FP_{korr}$) de la pédale d'accélérateur, la puissance ($P_{BZ}$) de la pile à combustible étant commandée à partir de la demande (FP) de la pédale d'accélérateur.

2. Procédé selon la revendication 1, caractérisé en ce qu'une valeur de consigne ($I_{FP}$) du courant pour la pile à combustible (1) est déterminée directement à partir de la demande (FP) de la pédale d'accélérateur au-dessous d'une valeur limite ($_{BZ\text{-}g}$) pour la tension instantanée de la pile à combustible sur la base de la vitesse de rotation instantanée ($n_{fm}$) du moteur électrique de déplacement (19), par l'intermédiaire d'un champ de caractéristiques de courant (bloc 22) du moteur électrique de déplacement (19).

3. Procédé selon la revendication 1, caractérisé en ce qu'une valeur de consigne de puissance ($P_{PF}$) est déterminée à partir de la demande (FP) de la pédale d'accélérateur au-dessus d'une valeur limite ($U_{BZ-g}$) pour la tension instantanée de la pile à combustible, sur la base de la vitesse de rotation instantanée ($n_{FM}$) du moteur électrique de déplacement (19), par l'intermédiaire d'un champ de caractéristiques de puissance (bloc 23) du moteur électrique de déplacement (19), et qu'une valeur de consigne ($I_{FP}$) du courant pour la pile à combustible (1) est déterminée à partir de cette valeur de consigne de puissance sur la base de la tension instantanée ($U_{BZ}$) de la pile à combustible.

4. Procédé selon la revendication 1, caractérisé en ce que la valeur de consigne ($I_{FP}$) du courant est accrue d'une valeur prédéterminée ($I_{hilf}$) en fonction du besoin nécessaire en courant des unités électriques auxiliaires, et que la valeur réelle mesurée ($I_{LV}$) du courant est réduite de la valeur correspondante ($I_{hilf}$).

5. Procédé selon la revendication 1, caractérisé en ce que le besoin accru en air de la pile à combustible (1) lors du démarrage à froid est corrigé par un facteur de démarrage à froid ($L_T/L_O$) prédéterminé en fonction de la température réelle de fonctionnement ($RT_S$).

6. Procédé selon la revendication 1, caractérisé en ce que dans le cas de la présence d'une alarme de tension de la pile ($U_{Z4}$), la valeur de consigne ($V_{L-soll}$) du débit volumique d'air est accrue d'une valeur prédéterminée ($V_{L-UZ4}$) et la valeur réelle mesurée ($V_{L-ist}$) du débit volumique d'air est réduite de la valeur correspondante ($V_{L-UZ4}$).

7. Procédé selon la revendication 1, caractérisé en ce que lors de la détermination de la demande corrigée ($FP_{korr}$) de la pédale d'accélérateur le rendement de l'unité d'entraînement (17) est pris en compte.

8. Procédé selon la revendication 1, caractérisé en ce qu'au moins les relations non linéaires du système (1) de la pile à combustible et de l'unité d'entraînement (17) sont déterminées lors d'essais et mémorisées en tant que champs non linéaires de caractéristiques.

9. Procédé selon la revendication 1, caractérisé en ce qu'une réaction à la demande (FP) de la pédale d'accélérateur est réalisée au moyen de la mesure de la valeur réelle ($V_{L-ist}$) du débit volumique d'air.

10. Procédé selon la revendication 1, caractérisé en ce que l'alimentation en air de la pile à combustible (1) est maintenue, en fonction du courant à délivrer ($I_{FP}$), à l'intérieur d'une gamme $\lambda$ prédéterminée.

# Fig. 1

Fig. 2

Fig. 3